# EUROPEAN PATENT APPLICATION

(11) **EP 1 561 385 A1**
(43) Date of publication of application: **10.08.2005**
(21) Application number: 04075319.6
(22) Date of filing: 03.02.2004
(51) Int. Cl.: A23P 1/14

(54) **Production of expanded food crackers**

(71) Applicant: Incomec-Cerex, 9660 Brakel (BE)
(72) Inventor: Van den Berghe, René, 9660 Brakel (BE)

(57) **Abstract**

The invention provides in an improved pressure-baking apparatus for producing puffed crackers from a starch-containing cereal or other food material, thereby allowing better control of expansion resp. product consistency for an enlarged range of crackers types, materials and shapes.

Accordingly the apparatus has a baking mold comprises the combination of a fixed upper die plate (1,2), a lower punch plate (3,4) directly driven and supported by a cylinder/pistion unit (10), and therebetween a peripheral mold plate (6) comprising die holes (7) in registry with said upper dies (2) and lower punches (4), said peripheral plate being selectively movable in the vertical direction between said fixed upper die plate and driven lower punch plate.

An hydraulic power system (11,17) integral with the apparatus is linked with drive unit (10).

## Description

The present invention relates to the production of puffed food of the type expanded crackers of desired shape and dimensions, obtainable by pressure-baking a cereal raw material, mixtures of cereals and other food raw materials which all contain a suitable amount of expandable starch. The raw material may include whole grains, crushed grains or broke, pretreated material (e.g. steamed or pre-gelatinized), inclusive milled grains and admixtures thereof in the form of pellets comprising a selected starch or gelatinous constituent selected from corn, wheat, rice, barley, soya, potato etc.

Pressure-baking and expanding a starch-containing raw food material into puffed crackers, cakes, mini-cakes and similar snacks, which is usually carried out between the heated dies of a closeable mold, has now become a standard technology in the field of manufacturing health-promoting nutrition products of low fat content with appropiate amounts of protein and carbohydrates.
Production processes and apparatuses therefor are disclosed in numerous patent publications such as e.g. US-A-4328741, US-A-4667588, US-A-4734289, US-A-4888180, US-A-5102677, US-A-5376395, US-A-5467693, US-A-5562021, US-A-5755152, EP-A-0367031, WO-A-88/00797, EP-A-0499301, EP-A-1025764 etc.
Each one of said documents teaches specific apparatus designs and/or process variations for improving particular aspects of puffed cracker manufacture.
In addition there have been made various proposals to render the taste, texture and shape of the puffed crackers more amenable to consumer preferences.

The instant inventor, having examined the different prior art cracker production methods, came to the conclusion that the existing processes and devices of commercial importance still have room for improvement, in particular w.r.t. the steering and control of the baking-expansion cycle inclusive the adjustment or fine-tuning thereof, the aim of said control improvement being the provision of more reliable production method, particularly involving a cosely controlled baking-expansion cycle, which should enable to produce in a consistent way any required brand of puffed crackers in terms of cereal or starch base compositions such that desired properties like crispness, density, shape stability, texture etc. can be incorporated therein.
To achieve this goal there is apparently a need for further apparatus improvements and adequate process adaptations.

The present invention fulfills this object by proposing a novel apparatus drive concept intended to provide a better controlled and closer responding expansion albeit to an adjustable extent. This should allow the production of a broader scala of "customized" puffed snack products, while retaining for each product the required consistency in base quality resp. of desired special properties. Moreover, the machine operation should remain simple and give rise to reliable and economic conditions of mass production.

Accordingly the invention proposes a puffing apparatus comprising a heatable mold formed by the combination of an upper die element, a ring die or peripheral die element and a lower die element, which die elements are operatively connected so as to cooperatively define therein a pressure-baking mold resp. an expansion chamber, the improvement wherein the heatable upper die is a stationary element forming a pressure support resp. receiving/guiding means for the ring die and defining therewith a mould cavity being open ended in the downward direction, said ring die being an annular element capable of being vertically moved in upward and downward directions, and wherein the lower die element is a heatable punch supported and driven by a hydraulic jack mounted vertically in line with said moveable punch.

This unique operative combination of die elements is not taught or suggested in the prior art. The major advantage of the innovative design is the ability of simultaneously and/or separately controlling the two expansion-defining parameters "displacement length and die withdrawal speed" in a direct and accurate manner. At the same time there still are the intrinsic mechanical and operational benefits associated with the use of the combined die means of a fixed upper die and a moveable ring element for constituting the upper wall and peripheral walls of the mold cavity defining the baking-expansion chamber, see in this connection i.a. patent specifications US-A-5102677 and US-A-5467693 assigned to the same inventor as of the present application, the technical content of which is incorporated herein by reference in its entirety, at least to the extent that the three-part mold designs and their related assembly into a compact puffing apparatus are concerned.

A novel process and product feature of the present invention concerns the ability to provide puffed snacks with an adaptable expansion and texture property, thereby taking into account the intrinic expansability of the used food raw material, which depends i.a. on cereal type, starch content, grain size, moisture content and further on different pretreatments and premix formulations to which the food raw material to be puffed may have been subjected: e.g. grain pretreatment resp. premix conditioning in pellet form etc. (steamed, parboiled, pre-gelatinizing to variable degree, predeformation, pellet composition and starch/gelatin content,...).
Although the macroform and dimensions of a puffed cracker are greatly determined by the die shape, and also by the preset adjustable expansion volume of the die chamber and the amount of raw material filled into the die cavity, it is a particular merit of the present invention to enable controll and adaptation of texture, density and form of the outer surfaces of the finished cracker (incl. flatness, relative waviness, porosity, rugosity and dimples) by regulating the expansion volume and expansion speed to a desirable extent.
For instance a free or unconstrained downward expansion , which gives rise to an irregular cracker surface aspect, may in one case be intensified or in another case be dampened, or it can be partially reversed to constrained expansion by adapting the machine settings for expansion volume (lower die retraction positions, incl. heigth of ring die) and downward drive speed (punch retraction velocity vs. actual expansion speed) for a given quantity of food raw material filled in to the mold.

The above and other objects, peculiar features and advantages of the invention will become more apparent from the description of two examplary embodiments of the invention.
The description makes reference to the following drawings:
Figure 1 ilustrates the basic process steps of producing a puffed cracker according to the invention.
Figure 2 shows a front view of an apparatus embodiment of the present invention.
Figure 3 shows a side view of the apparatus with feeding device, product discharge chute and hydraulic power system.
Figure 4 shows a hydraulic cylinder jack suitable for driving the lower die or punch.
Figure 5 illustrates a first operative drive embodiment of the invention.
Figure 6 illustrates a second operative embodiment of the invention.

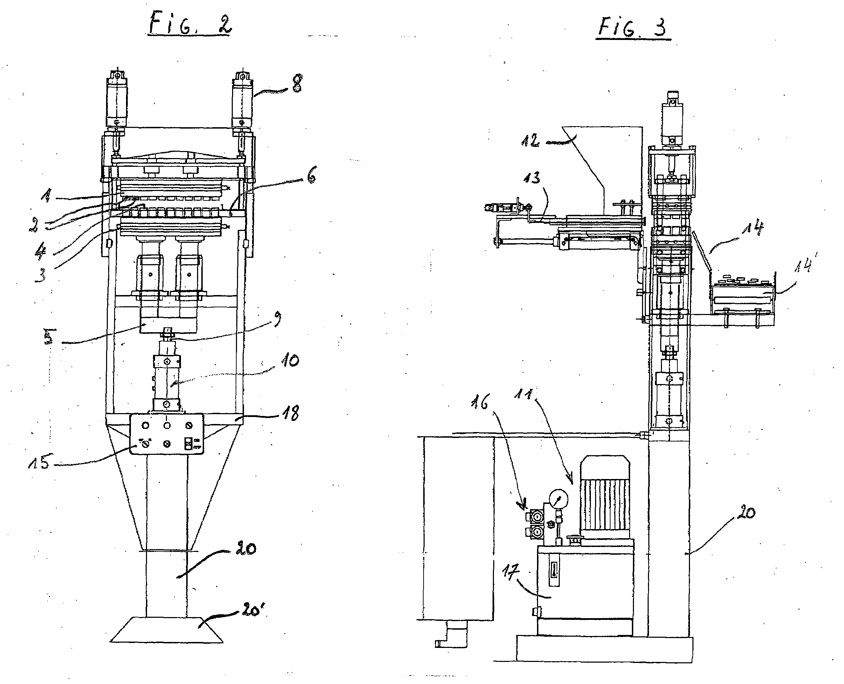

Referring to figures 2 and 3, there is shown a preferred constructive lay-out of the apparatus according to the invention. The exemplary apparatus shows a multi-die arrangement for the production of a plurality of crackers with one mold unit for each process cycle. A heated stationary upper die plate 1 having a plurality of fixed downwardly directed die elements 2 is mounted to an upper part of the apparatus frame 20. Vertically spaced below fixed plate 1 there is provided a heated die plate 3 with multiple upwardly directed punch elements 4, which punch plate is supported on a movable carrier 5 element. Fixed die elements 2 and movable punch elements 4 are disposed accurately in line. A movable ring mold element 6 is arranged between die plates 1 and 3 , and comprises a plurality of die holes 7 which are in registry with the upper die heads 2 and also with lower punch heads 4. In figure 2 said ring mold is shown in a lower position wherein it rests onto movable die plate 3 such that the punch heads 4 are slidably penetrating the die holes 7. The up and down movement of the ring mold plate 7 is actuated by cylinderer elements 8 fixed to an upper frame plate of the apparatus. The movable support 5 of the lower die plate is directly carried by to the drive shaft 9 of a hydraulic jack 10 , typically a cylinder unit with double action piston which is operatively linked with a hydraulic power system 11 by means of oil-pressure feed and return lines incl. suitable valves assmbled as a unit (16) close to the oil reservoir 17 of the hydraulic power system. Upon actuation of the hydraulic power unit drive shaft 9 of the cylinder piston will be selectively displaced in the vertical direction following a cycle of desired upward and downward movements, incl. temporary stops as prescribed and controlled by a PLC unit of the apparatus connected with operator panel 15.
In figure 2 numerals 12 resp. 13 indicate the raw material storage container resp. the feeding slide for supplying starch material to the baking mould. The finished puffed snacks are discharged via a chute 14 into a product bin or a conveyor belt 14'.
The hydraulic jack or drive cylinder 10 is fixed on a lower beam or plate of the apparatus frame, such that its cylinder axis is substantially in vertical alignement with the central axis of the moulding plates 1 and 3.
On the front side of the apparatus a control and steering panel 15 is provided, by which the required production cycle settings are effected and adjusted. In addition heating of die plates 1,3 is controlled and actual baking temperatures are monitored.

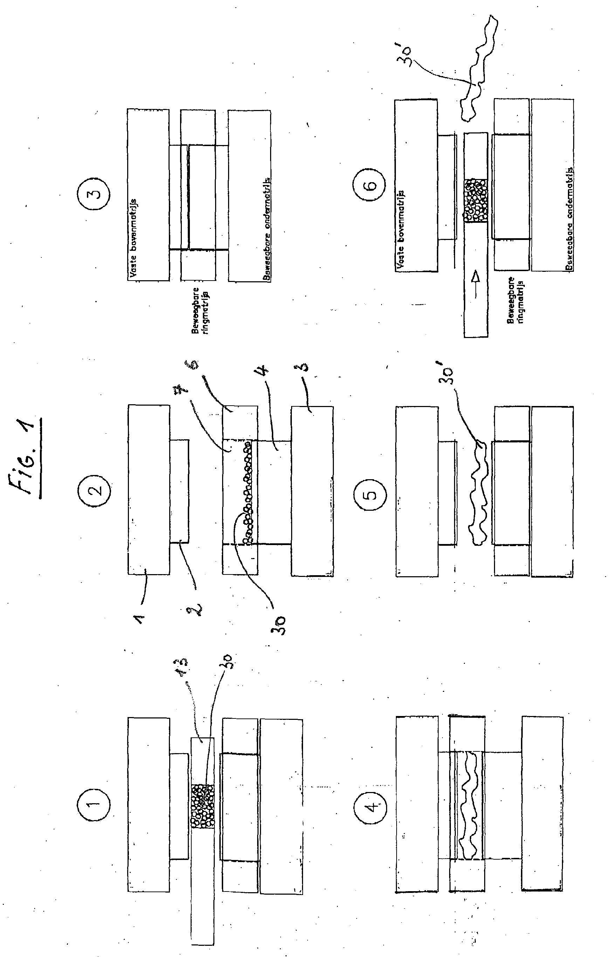

The operational sequence with more in detail the actual die movements may be better understood with reference to figure 1.
In stages 1 and 2 the cracker discharge and the feeding of grainy material in the baking mold is illustrated. The sliding plate 13 loaded with raw material 15 enters in stage 1 the gap between fixed die element 2 and movable punch element 4, the latter being then in a (lowered) cracker push-out position where the punch top surface extends just above the upper rim of the ring mold such that puffed cracker is pushed away (see stage 6) by slide 13. In stage 2 the punch is moved downwards so as to form, within ring die hole 7, a grain filling cup into which feeding slide 13 supplies a required amount of grainy material 30.
In stage 3 both the lower die and the ring die are moved upwards and the grainy material is heated and compressed between the hot heads (2,4) of upper die and lower punch defining then a sealed die cavity together with the ring die. This baking position is maintained for a few seconds to gelatinize and render amorphous the starch-containing grain material, cereal mix or pellet material and the like.
In stage 4 the ring mold is kept in its raised position sealed against upper die head 2, but the punch is quickly moved towards a lower position still confined within the ring, thereby defining a predetermined expansion volume. As a result of the sudden pressure drop the gelatinized and heat-softened material together with released gases (steam) will explosively expand in the downward direction so as to form a selfsustaining puffed cracker 30'.
In stage 5 the ring mold is lowered towards to mold opening position wherein the cracker resting on the punch head can be discharged by the feeding slide as depicted in stage 6.

Crucial to the desired cracker type and quality is the adjustment of the expansion volume and the realisable retraction velocity of the movable punch in stage 4. A full and free expansion will be obtained when the preset expansion volume is not lower than the max. expansion potential of the hot-compressed grain mass and the downward velocity of the retracted punch head is not substantially smaller than the velocity of the propagating material expansion front. A full but partially constrained expansion is obtained when the preset expansion volume is sufficient but the expanding material propagates much quicker than the descending speed of the punch, i.e. the expansion front constantly hits/pushes the moving punch descending at a slower pace.
Machine settings corresponding with lower expansion volumes than needed for full potential (free) expansion volumes will give rise to puffed crackers of relatively greater density but featuring a greater bonding strength and a flatter outer surface.

It is to be understood that carrying out the complete range of possible expansion rates or conditions, varying from from "full and free" expansion to the other extreme of "partial and/or constrained" expansion is not realisable with prior art puffing apparatuses.

The apparatus and method of the present invention renders this goal feasible, in that for a plurality of desirable cracker qualities the apparatus settings in terms of expansion volume and required punch speed are sufficiently ample, flexible and simple to accomplish. The first one of said two parameters are readily adjustable by: selecting/presetting the end position of the retracted punch relative to the ring mold, optionally in combination with a selected enlarged height dimension of the movable ring die and/or in combination with an upper position adjustment of the ring die relative to the upper die head 2. The second expansion parameter is rendered possible and controllable by use of a direct connection and actuation drive between only one "downwardly" movable punch element pressed against a stationary upper mold, wherein punch retraction velocity is further adjustable by adapting the inner design of the cylinder/piston unit, in particular by adaptations w.r.t. relative oil quantities to be displaced and by throtling or anti-damping measures, incl. optimizing valve actuation and response velocity.

The novel apparatus concept has the additional advantage of being sustained by gravity forces, i.e. weight of lower mold element and supporting carrier, which sustain downward movement of the punch.
Moreover the apparatus has only one driven mold element in direct connection with a cylinder/piston unit, which remarkably simplifies machine operation and required settings, incl. adjusting and controlling the same. This renders the apparatus less expensive but at the same time more reliable in use.
The settings and control measures in terms of selected hydraulic drive parameters include: actuation sequence and timing incl. piston stroke control with displacement detectors and switches. In this connection an instant response of the punch to the selected process cycle (PLC, piston stroke timing and distances) may be further improved by an optimum oil flow arrangement (inflow resp. return flow) within the cylinder unit and to the hydraulic power system, preferably sustained by appropiate quick-action valve means disposed on the power generation/pump unit close to the cylinder or otherwise mounted directly on the cylinder drive unit. Said features shorten response time of the apparatus and sustain expansion control accuracy.

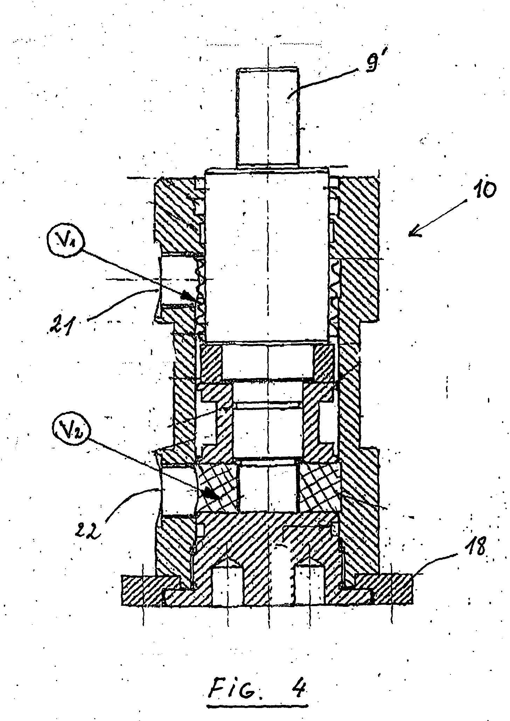

Figure 4 shows a cylinder/piston unit 10 suitable for directlly driving the lower mold 3, cf. figure 2. Piston shaft 9' is directly linked with connection/support element 9 of the lower die carrier element 5. Oil port 21 and 22 allow connection with pressure oil feed lines from the hydraulic power unit.
As can be seen from figure 4 the oil volumes V1 and V2 to be displaced in the upper resp. lower chamber of the cylinder are designed to be greatly different. When the cylinder piston is brought in the raised position (pressure-baking) the return expansion stroke thereafter requires a quick outflow of oil, which is enhanced by providing a low volume V1 in the upper chambe, i.e. a large preset (position detector, PLC-controlled in combination with valve actuation) retraction displacement of the piston will need only a small oil volume to be displaced thereby controlling piston relative velocity vs. expansion speed and volume.

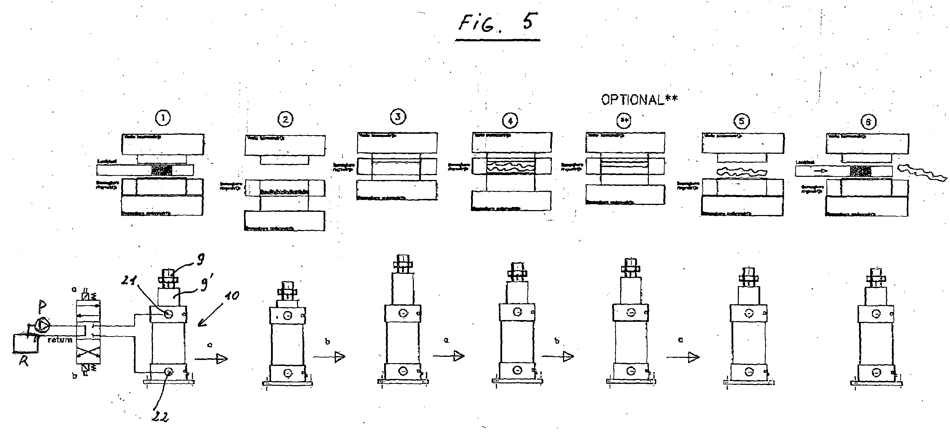

Figure 5 illustrates the process sequence (figure 1) in combination with use of the cylinder unit 10 of figure 4. At the left side of the figure there is schematized a suitable oil circuit and valve arrangement (a,b) between the hydraulic power system (pump P and reservoir R shown) and the cylinder unit. This embodiment allows free expansion at high speed but is also adjustable to gradually constrained conditions.

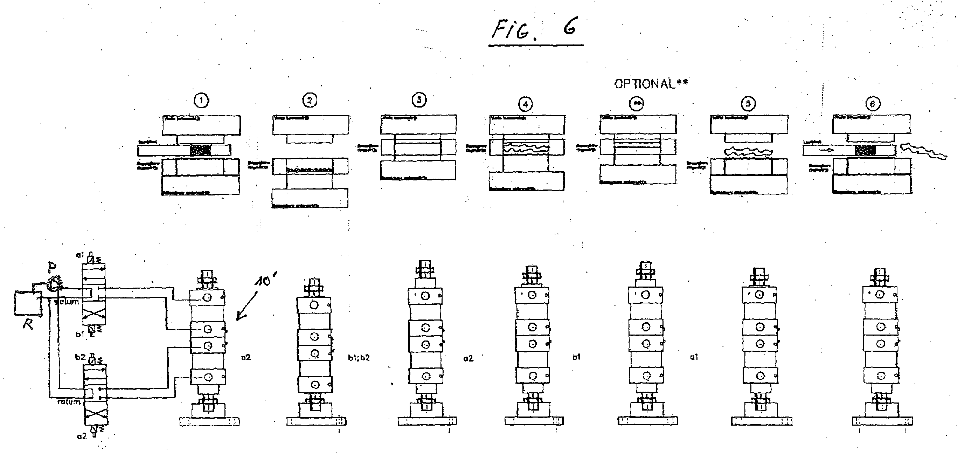

Figure 6 illustrates the same process sequence but in this case the direct hydraulic drive unit is designed as a double piston/cylinder unit. This allows a better control of the thickness of the expanded cracker, since the preset expansion volume can be better maintained by giving one of the two cylinder pistons a fixed return position. This second embodiment thus has the benefit of a high expansion speed while simultaneously enabling a precise control of the desired thickness of the expanded product.
In both embodiments an optional cracker dimension equilibration step (**) may be provided between step 4 and 5.

In the above description and related drawings there have been described what is presently believed to be preferred embodiments of the invention. However, those skilled in the art will realize that changes and component modifications may be made thereto, such as for instance in the design of the mechanical components, the cylinder/piston unit and valve arrangements and the control means (PLC etc.), without departing from the innovative basic concept of the invention. It is intended to cover all such apparatus modifications and combinations that fall within the true scope of the invention as defined in the appended claims.

## Claims

1. An apparatus for producing puffed crackers from a starch-containing raw material by pressure-baking and expanding said raw material in a heated mold comprising an upper mold element, a lower mold element and therebetween a peripheral mold element, **characterized in that** said mold elements comprise the combination of:
a heatable stationary upper mold plate (1) comprising one or more downwardly directed upper die elements (2), said upper plate being detachably and adjustably fixed to an upper frame element of the apparatus frame;
a heatable lower mold plate (3) comprising one or more upwardly directed die or punch elements (4) arranged in registry with said upper die elements, said lower mold plate being adapted to be moved upwardly and downwardly relative to said upper mold plate;
an intermediate, optionally heatable mold plate (6) of predetermined height thickness disposed between said upper and lower mold plate and comprising one or more die holes (7) arranged in registry with said upper die elements (2) and lower punch elements (4), said intermediate plate being adapted to be moved upwardly and downwardly relative to said upper mold plate and said lower mold plate such that either one or both of said upper dies and lower punches are slidably received in said die holes so as to define mold cavities therein;
first actuating means (8) for moving said intermediate mold plate (6);
second actuating means for moving said lower mold plate comprised of a hydraulic cylinder-piston unit (10) mounted directly below said lower mold plate, said piston having a driven shaft (9') directly connected with a carrier unit (5,9) of said lower punch plate , whereby the driven shaft and carrier axis are disposed vertically in line;
control and steering means acting on said first and said second actuating means capable of of moving, positioning and temporarlily holding said intermediate mold plate and said lower mold plate in selected lifted, lowered or intermediate positions.

2. An apparatus according to claim 1, wherein the cylinder/piston unit (10) is adapted for high speed retraction of the piston.

3. An apparatus according to claims 1 or 2, wherein the cylinder/piston unit comprises the combination of two vertically aligned cyllinder/piston elements (10').

4. An apparatus according to claims 1 to 3, comprising means for adjusting and controlling an expansion volume for said pressure-baked product within said heatable mold.

5. An apparatus according to claims 1 to 4, comprising means for adjusting the retraction velocity of said cylinder piston resp. said lower punch plate (4) relative to the expansion speed of said pressure-baked product.
